# EUROPÄISCHE PATENTSCHRIFT

(11) **EP 3 398 432 B1**
(45) Veröffentlichungstag und Bekanntmachung des Hinweises auf die Patenterteilung: **15.07.2020**
(21) Anmeldenummer: 18170410.7
(22) Anmeldetag: 02.05.2018
(51) Int. Cl.: A01K 27/00

(54) **ROLLLEINE ZUM AUFROLLEN UND ABROLLEN EINER LEINE**
ROLLING LEAD FOR COILING AND EXTENDING A LEAD
LAISSE ENROULABLE POUR ENROULER ET DÉROULER UNE LAISSE

(30) Priorität: 02.05.2017 DE 102017109355
(43) Veröffentlichungstag der Anmeldung: 07.11.2018
(73) Patentinhaber: Flexi-Bogdahn Technik GmbH & Co. KG, 22941 Bargteheide (DE)
(72) Erfinder: Groth, Jürgen, 23860 Groß Schenkenberg (DE); Bogdahn, Manfred, 22391 Hamburg (DE)
(74) Vertreter: Zacco Patent- und Rechtsanwalts GmbH

(56) Entgegenhaltungen:
- WO-A1-2017/091701
- DE-A1- 10 035 583
- DE-A1-102016 207 739
- GB-A- 2 481 403

## Beschreibung

Die Erfindung betrifft eine Rollleine zum Aufrollen und Abrollen einer Leine, insbesondere zum Führen eines Tieres, mit einer Leinenrolle, die drehbar an einem Träger gelagert und mittels Rückstellmitteln in eine Aufrollposition rückatellbar ist, in der die Leine auf die Leinenrolle aufgewickelt ist, mit Blockiermitteln zum Blockieren eines Abrollens der Leine von der Leinenrolle, und mit einem Getriebe, das mit der Leinenrolle gekoppelt ist und bei Abrollen einer vorbestimmten Leinenlänge von der Leinenrolle ein Blockieren der Leinenrolle mittels der Blockiermittel bewirkt, wobei das Getriebe ein erstes Getriebeelement, das drehbar an dem Träger angeordnet ist, und ein zweites Getriebeelement hat, das drehfest an dem träger angeordnet ist, und dass das erste Getriebeelement und das zweite Getriebeelement einander zugeordnet einen Außenumfang und einen Innenumfang haben, die mindestens in einem aktiven Zustand miteinander in Eingriff stehen,

Eine solche Rollleine ist aus der WO 2017/091701 A1 bekannt.

Eine weitere Rollleine ist aus der US 2013/0008392 A1 bekannt Bei der dort beschriebenen Rollleine ist die Leinenrolle mittels eines Kegelradgetriebes mit einer Spinde gekoppelt, auf der eine Mutter zum Bewirken des Blockierens der Blockiermittel läuft. Durch Einstellen eines Mitnehmers relativ zu der Position der Mutter kann ein blockieren der Blockiermittel bei einer wählbaren Leinenlänge bewirkt werden. Nachteilig bei der bekannten Rollleine ist, dass das Kegelradgetriebe mit der Spindel verhältnismäßig viele grazile bewegliche Teile besitzt. Die Längenbegrenzung ist einem hohen Verschleiß ausgesetzt. Zudem kann bei den naturgemäß hohen auftretenden Kräften bei einer Rollleine eine Beschädigung zum Beispiel bei einem durchgehenden Hund eintreten.

Eine ähnliche Rollleine zeigt die DE 10 2016 207 739 A1. Bei dieser Rollleine ist als Getriebe ein mehrstufiges Stirnradgetriebe vorgesehen. Auch dadurch lässt sich eine Längenbegrenzung erzielen. Jedoch hat diese Rollleine lediglich die Möglichkeit, die Längenbegrenzung abzuschalten oder einzuschalten, Eine Auswahl der Leinenlänge ist nicht möglich. Auch bei dieser Rollleine besteht das Getriebe aus einer Vielzahl kleiner beweglicher Teile mit feinen und grazilen Zahnrädern. Auch hierbei ist mit einem hohen Verschleiß und dementsprechend einer nicht ausreichenden Betriebssicherheit zu rechnen.

Eine weitere Rollleine mit wählbaren Leinenlägen ist aus der GB 2481403 A bekannt Eine weitere Rollleine mit festen Leinenlängen ist aus der DE 100 35 583 A1 bekannt.

Der Erfindung liegt das Problem zugrunde, eine Rollleine mit einer Längenbegrenzung mit hoher Betriebssicherheit, geringem Verschleiß und einfachem Aufbau zu ermöglichen.

Das Problem wird bei einer Rollleine der vorstehend genannten Art mit den Merkmalen von Anspruch 1 gelöst, d.h. insbesondere, dass das Getriebe ein Zykloidgetriebe ist.

Auf diese Weise lässt sich mit wenigen Tellen und geringem Aufwand eine betriebssichere und verschleißarme Getriebeverbindung zum Auslösen der Blockiermittel gewährleistet.

Eine Weiterbildung der Erfindung zeichnet sich dadurch aus, dass der Außenumfang kleiner ist als der Innenumfang. Auf diese Weise kann der Außenumfang im Innenumfang angeordnet sein und auf diesem Abrollen, Vorzugsweise hat der Außenumfang eine Außenverzahnung und/oder der Innenumfang eine Innenverzahnung. Diese können miteinander kämmen. Auf diese Weise wird ein guter Kraftschluss ermöglicht. Die Zähne können kurvenabschnitt förmig ausgebildet sein. Auf diese Weise treten besonders geringe Scherkräfte auf. Wenn bei einer Weiterbildung die Anzahl der Zähne der Außenverzahnung ungleich, insbesondere kleiner, als die Anzahl der Zähne der Innenverzahnung ist, lässt sich ein Übersetzungsverhältnis einfach und wunschgemäß einstellen. Insbesondere ist es von Vorteil, wenn die Außenverzahnung einen Zahn weniger als die Innenverzahnung hat. Besonders bevorzugt hat die Außenverzahnung 32 Zähne und die Innenverzahnung 33 Zähne. Auf diese Weise wird ein Untersetzungsverhältnis von 32 zu 1 erzielt. Mit einer Außenverzahnung mit 31 Zähnen und einer

Innenverzahnung mit 32 Zähnen lässt sich auf gleiche Weise ein Untersetzungsverhältnis von 31 zu 1 erzielen.

Eine andere Weiterbildung der Erfindung zeichnet sich dadurch aus, dass das erste Getriebeelement exzentrisch an der Leinenrolle gelagert ist. Insbesondere ist das erste Getriebeelement drehbar an der Leinenrolle gelagert. Durch diese Exzentrizität lässt sich eine einfache Kopplung der Leinenrolle mit dem Getriebe zum Antreiben desselben bewirken. Wenn das Getriebe ein Exzentergetriebe ist, lässt sich so einfach und weitgehend verschleißfrei Kraft übertragen. Vorzugsweise ist das Getriebe ein Zykloidgetriebe. Ein derartiges Zykloidgetriebe überträgt ein Drehmoment wälzend und ist deshalb keinen Scherkräften ausgesetzt. Schlagartige Ausfälle durch Bruch sind damit praktisch ausgeschlossen.

Eine vorteilhafte Ausgestaltung der Erfindung zeichnet sich dadurch aus, dass das erste Getriebeelement Auslösemittel hat. Auf diese Weise können die Blockiermittel einfach ausgelöst werden. Eine Weiterbildung zeichnet sich dadurch aus, dass die Auslösemittel ein am Außenumfang angeordnetes Auslöseelement haben. Wenn das Auslöseelement beispielsweise ein Vorsprung ist, ergibt sich ein besonders einfacher Aufbau zum Bewirken des Blockierens der Blockiermittel. Es ist außerdem von Vorteil, wenn Übertragungsmittel zum Übertragen eines Auslösemomentes auf die Blockiermittel vorgesehen sind. Diese Übertragungsmittel ermöglichen ein einfaches Übertragen des Auslösemomentes an den gewünschten Ort. Ein besonders einfacher Aufbau ergibt sich, wenn die Übertragungsmittel eine Schubstange haben. Weiter ist es von Vorteil, wenn die Übertragungsmittel rückstellbar sind. Auf diese Weise wird eine wiederholte Auslösung der Blockiermittel ermöglicht. Vorzugsweise können die Übertragungsmittel in eine Ruheposition rückstellbar sein. Dies ermöglicht definierte Ausgangsbedingungen vor dem Auslösen der Blockiermittel. Eine Rückstellung der Übertragungsmittel mittels einer Feder ergibt einem besonders einfachen und zuverlässigen Aufbau.

Eine Weiterbildung der Erfindung zeichnet sich dadurch aus, dass die Blockiermittel ein Blockierelement haben. Dieses Blockierelement kann die Leinenrolle zuverlässig blockieren. Hierzu ist es insbesondere von Vorteil, wenn die Blockiermittel mit der Leinenrolle in Eingriff bringbar sind. Vorzugsweise sind die Blockiermittel in eine Blockierposition schwenkbar. Dies ergibt einen einfachen und stabilen Aufbau. Das Verschwenken des Blockierelementes kann durch die Abrollbewegung der Leinenrolle und insbesondere die an der Leine wirkende Zugkraft verstärkt werden. Auf diese Weise wird eine Art Servomechanismus erreicht. Das Verstärken des Verschwenkens und damit der Einrückwirkung der Blockiermittel durch die Zugkraft an der Leine ist auch unabhängig von der Erfindung von Vorteil. Es ist außerdem von Vorteil, wenn die Blockiermittel rückstellbar sind. Hierdurch ist wiederum ein wiederholtes Auslösen möglich. Vorzugsweise sind die Blockiermittel in eine Ruheposition rückstellbar. Dies ergibt eine definierte Ausgangsposition. Ein besonders einfacher Aufbau für die Rückstellung ergibt sich durch das Vorsehen einer Feder.

Eine vorteilhafte Ausgestaltung zeichnet sich dadurch aus, dass das Blockierelement mit den Auslösemitteln in Wirkverbindung bringbar ist. Auf diese Weise kann das Blockierelement von der sich verhältnismäßig schnell drehenden Leinenrolle angetrieben werden. Es ist dabei von Vorteil, wenn das Blockierelement einen Anstoßabschnitt ausweist. Dieser Anstoßabschnitt kann so ausgestaltet sein, dass ein zuverlässiges und fehlerfreies in Eingriff treten unterstützt wird. Eine einfache und wirksame Ausgestaltung ergibt sich dann, wenn der Anstoßabschnitt mit einem Mitnehmer an der Leinenrolle in Eingriff bringbar ist. Die Wechselwirkung des Mitnehmers mit dem Anstoßabschnitt kann dann ein Schwenken des Blockierelementes in die Blockierposition bewirken. Auf diese Weise wird die Zugkraft eines angeleinten Tieres, beispielsweise eines Hundes, zum Unterstützen des Blockierens der Leinenrolle genutzt werden. Es entsteht eine Art Servounterstützung für den Bremsmechanismus.

Eine andere Weiterbildung der Erfindung zeichnet sich dadurch aus, dass Betätigungsmittel zum manuellen Betätigen der Blockiermittel vorgesehen sind. Auf diese Weise können die Blockiermittel doppelt verwendet werden, nämlich einmal für die Längenbegrenzung und einmal für ein manuelles Blockieren. Besonders einfach wird der Aufbau, wenn die Betätigungsmittel einen Taster haben. Derartige Taster sind zuverlässig und können große Kraft bei hoher Betriebssicherheit übertragen.

Eine andere Weiterbildung der Erfindung zeichnet sich dadurch aus, dass Auswahlmittel zum Auswählen der vorbestimmten Leinenlänge vorgesehen sind. Auf diese Weise ist die vorbestimmte Leinenlänge an den jeweiligen Bedarf anpassbar. Das macht die Rollleine besonders komfortabel.

Eine Weiterbildung ist dadurch gekennzeichnet, dass die Auswahlmittel Stellmittel zum Einstellen der Winkelposition des zweiten Getriebeelementes zu dem Träger haben. Auf diese Weise ist ein einfacher Aufbau der Auswahlmittel möglich. Das Einstellen kann kontinuierlich oder stufenweise erfolgen. Ein kontinuierliches Einstellen macht die Anwendung komfortabel. Ein stufenweises Einstellen ergibt einen einfachen Aufbau und eine hohe Betriebssicherheit. Vorzugsweise ist eine Anzeige der Winkelposition an einem Gehäuse der Rollleine vorgesehen. Auf diese Weise kann von Außen die Winkelposition eingesehen werden. Insbesondere kann hier auch die zugehörige Leinenlänge angezeigt werden. Es ist hierzu möglich, ein Bedienelement zum Einstellen der Winkelposition durch das Gehäuse hindurchzuführen. Auf diese Weise kann das Bedienelement auch gleich als Anzeige dienen.

Eine andere Weiterbildung der Erfindung ist dadurch gekennzeichnet, dass Ausrückmittel zum Ausrücken des ersten Getriebeelementes und des zweiten Getriebeelementen voneinander vorgesehen sind. Mittels dieser Ausrückmittel lässt sich die Längenbegrenzung einschalten oder ausschalten. Dies macht die Konstruktion robust und verschleißarm, da im ausgerückten Zustand keine mechanische Beanspruchung erfolgt. Vorzugsweise wird das zweite Getriebeelement von dem ersten Getriebeelement ausgerückt. Dies vereinfacht weiter den Aufbau, da das zweite Getriebeelement drehfest ist.

Eine Weiterbildung ist dadurch gekennzeichnet, dass die Ausrückmittel ein verstellbares Ausrückelement haben. Dieses Ausrückelement ermöglicht ein zuverlässiges Ausrücken. Dass Ausrückelement kann manuell verstellbar sein. Dies ergibt einen einfachen Aufbau und insbesondere eine intuitive Bedienung. Vorzugsweise ist das Ausrückelement eine verdrehbare Ausrückscheibe. Ein Verkanten bei der Ausrückbewegung wird so nahezu unmöglich. Wenn die Ausrückscheibe mindestens eine Schräge hat, kann mittels dieser Schräge ein zuverlässiges einfaches Ausrücken erfolgen. Es ist außerdem von Vorteil, wenn auf der Schräge mindestens eine dem zweiten Getriebeelement zugeordnete Nocke zum Ausrücken gleitet. Dies ergibt eine definierte Ausrückbewegung. Vorteilhafterweise kann die Nocke als Schräge ausgebildet sein. Auf diese Weise ergeben sich verhältnismäßig geringe Belastungen des Materiales.

Nachfolgend wird ein Ausführungsbeispiel der Erfindung anhand der Zeichnungen näher erläutert

Es zeigen:
- Fig. 1: eine Seitenansicht einer Rollleine als ein erstes Ausführungsbeispiel der Erfindung,
- Fig. 2: eine teilgeschnittene Seitendarstellung der Rollleine von Fig. 1,
- Fig. 3: eine Seitenansicht einer linken Gehäusehälfte der Rollleine von Fig. 1 von rechts gesehen,
- Fig. 4: eine Teildarstellung von Einzelkomponenten zur Längenbegrenzung der Rollleine von Fig. 1,
- Fig. 5: eine perspektivische Teildarstellung der Rollleine von Fig. 1 in einer Blockierstellung mit abgenommener rechter Gehäusehälfte,
- Fig. 6: eine Teildarstellung des Schnittes A-A von Fig. 1 in einer eingerückten Position des Getriebes,
- Fig. 7: eine Darstellung ähnlich Fig. 6 in einer ausgerückten Position des Getriebes,
- Fig. 8: eine perspektivische Darstellung eines ersten Getriebeelementes der Rollleine von Fig. 1,
- Fig. 9: eine perspektivische Darstellung eines zweiten Getriebeelementes der Rollleine von Fig. 1,
- Fig. 10: eine perspektivische Darstellung einer Ausrückscheibe der Rollleine von Fig. 1,
- Fig. 11: eine perspektivische Darstellung einer Verbindungsscheibe für das zweite Getriebeelement Fig. 9 in einer um 180° zu dem zweiten Getriebeelement umgeklappten Position,
- Fig. 12: eine teilgeschnittene Darstellung einer anderen Rollleine als ein zweites Ausführungsbeispiel der Erfindung, und
- Fig. 13: die wesentlichen Komponenten einer Längenbegrenzung eines weiteren Ausführungsbeispiels der Erfindung in einer Teildarstellung.

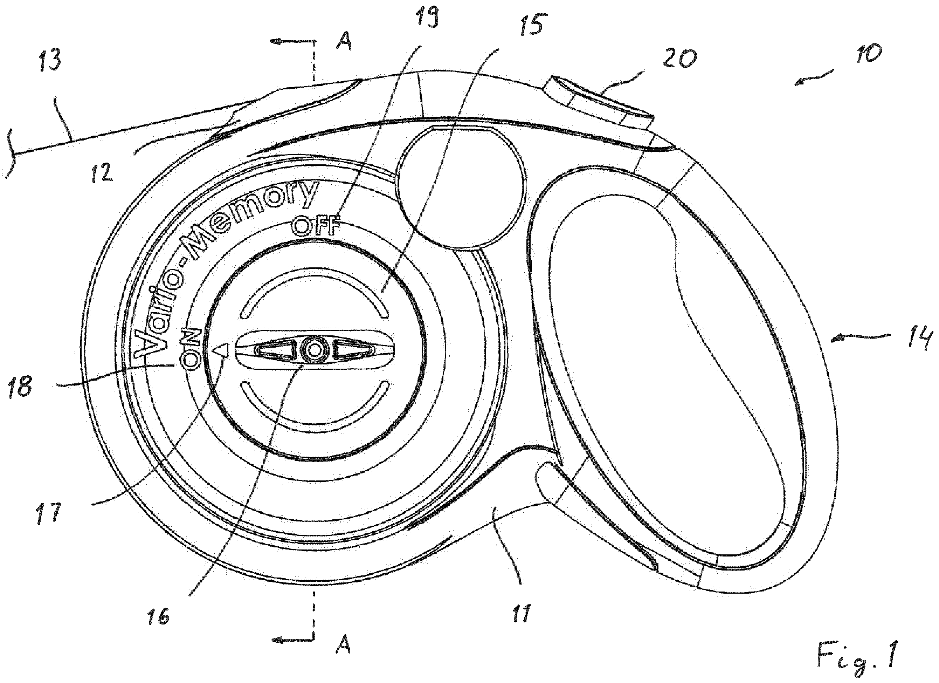

Fig. 1 zeigt eine Seitendarstellung einer Rollleine 10 als ein erstes Ausführungsbeispiel der Erfindung. Die Rollleine 10 hat ein Gehäuse 11 aus dem auf bekannte Weise mittels eines Auslaufstückes 12 eine Leine 13 ausziehbar ist. Bei der Leine 13 kann es sich um ein Seil oder einen Gurt handeln. Die Leine 13 wird mittels Federkraft auf eine im Innern des Gehäuses 11 angeordnete Leinenrolle aufgewickelt und kann von einem Haustier, beispielsweise einem Hund oder einer Katze gegen die Federkraft aus dem Gehäuse 11 herausgezogen werden. Am von dem Auslaufstück 12 abgewandten Ende des Gehäuses 11 ist ein Griff 14 angeordnet. Der Griff 14 kann von einer Bedienperson zum Führen des an der Leine 13 angeleinten Haustieres mit der Hand gehalten werden.

Wie sich der Figur weiter entnehmen lässt, weist das Gehäuse 11 seitlich angeordnet eine Stellscheibe 15 auf. Die Stellscheibe 15 hat ein Betätigungselement 16, das eine langgestreckte Gestalt hat und in der Fig. 1 etwa in Längsrichtung des Gehäuses 11 verläuft. In Verlängerung des Betätigungselementes ist in der Figur auf der von dem Griff 14 abgewandten Seite der Stellscheibe 15 eine Anzeigeelement 17 angeordnet. Das Anzeigeelement 17 ist bei dem gezeigten Ausführungsbeispiel als Dreieck 17 ausgebildet, dessen Spitze radial von der Stellscheibe 15 nach außen zeigt.

Angrenzend an die Stellscheibe 15 und dem Anzeigeelement 17 zugeordnet sind auf dem Gehäuse Anzeigeelemente 18, 19 angeordnet. In der gezeigten Position zeigt das Anzeigeelement 17, also das Dreieck 17 mit seiner Spitze auf das Anzeigeelement 18, das bei dem gezeigten Ausführungsbeispiel aus den Buchstaben ON besteht. In dieser Position ist eine nachfolgend noch näher erläuterte Längenbegrenzung der Auslauflänge der Leine 13 aus dem Gehäuse 11 eingeschaltet. Durch Verdrehen der Stellscheibe 15 mittels Betätigen des Betätigungselementes 16 um 90° in der Figur im Uhrzeigersinn wird das Anzeigeelement 17 in eine Position verbracht, in der die Spitze des Dreiecks 17 auf das Anzeigeelement 19 zeigt. Das Anzeigeelement 19 wird bei dem gezeigten Ausführungsbeispiel durch die Buchstaben OFF gebildet und weist auf einen Zustand hin, in dem die Längenbegrenzung der Rollleine 10 ausgeschaltet ist.

Wie sich der Figur außerdem entnehmen lässt, ist eine Taste 20 im Bereich des Griffes 14 in der Figur oben an dem Gehäuse 11 angeordnet. Die Taste 20 dient zum Betätigen von Blockiermitteln zum manuellen Blockieren eines Auslaufs der Leine 13 aus dem Gehäuse 11, wie nachfolgend noch näher erläutert wird.

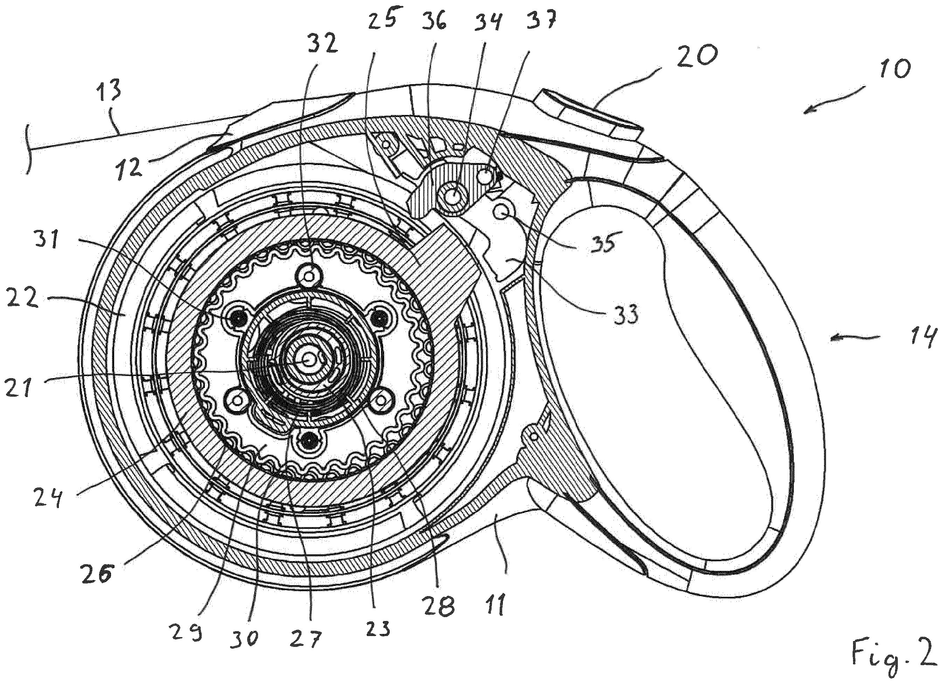

Fig. 2 zeigt eine teilgeschnittene Seitendarstellung der Rollleine 10 von Fig. 1. Wie sich der Figur entnehmen lässt, hat die Rollleine 10 eine um eine Achse 21 auf bekannte Weise drehbar in dem Gehäuse 11 gelagerte Leinenrolle 22. Die Leinenrolle 22 dient zum Aufrollen und Abrollen der Leine 13. Ein Exzenter 23 ist drehbar um die Achse 21 drehfest mit der Leinenrolle 22 verbunden. Auf dem Exzenter 23 ist drehbar ein erstes Getriebeelement 24 angeordnet, das einen nach außen abstehenden Vorsprung 25 an seinem Außenumfang aufweist.

Das erste Getriebeelement 24 ist bei dem gezeigten Ausführungsbeispiel kreisringförmig ausgestaltet und weist an seiner Innenumfangsfläche eine Innenzahnung 26 auf. Die Zähne der Innenzahnung sind bei dem gezeigten Ausführungsbeispiel kreisabschnittförmig. Mittels einer Spiralfeder oder Rollenfeder 27 ist das erste Getriebeelement 24 an eine drehfest in dem Gehäuse 11 angeordnete Basis 28 gekoppelt. Auf diese Weise kann das erste Getriebeelement 24 aus seiner in der Figur dargestellten Ruheposition gegen den Uhrzeigersinn und im Uhrzeigersinn verdreht werden und kehrt ohne auslenkende Kraft durch die Spiralfeder oder Rollenfeder 27 wieder in seine gezeigte Ruheposition zurück.

Wie sich der Figur weiter entnehmen lässt, ist ein zweites Getriebeelement 29 im Innern des ersten Getriebeelementes 24 angeordnet. Das zweite Getriebeelement 29 ist kreisscheibenförmig ausgebildet und hat bei dem gezeigten Ausführungsbeispiel einen zum Innenumfang des ersten Getriebeelementes 24 korrespondierenden Außenumfang. Im Einzelnen ist der Außenumfang des zweiten Getriebeelementes 29 geringfügig kleiner als der Innenumfang des ersten Getriebeelementes 24. Am Außenumfang des zweiten Getriebeelementes 29 ist eine Außenzahnung 30 angeordnet. Die Zähne der Außenzahnung 30 sind bei dem gezeigten Ausführungsbeispiel ebenfalls kreisabschnittförmig und korrespondierend der Zähne der Innenzahnung 26 des ersten Getriebeelementes 24 ausgebildet.

Das zweite Getriebeelement 29 weist außerdem drei Führungsstifte 31 auf, von denen der besseren Übersicht wegen in der Figur nur ein Führungsstift 31 mit einem Bezugszeichen versehen ist. Die Führungsstifte 31 dienen zur Aufnahme von nicht in den Figuren gezeigten Schraubenfedern, mittels derer sich das zweite Getriebeelement 29 drehfest an dem Gehäuse 11 abstützt. Den Führungsstiften 31 benachbart und jeweils zwischen zwei Führungsstiften 31 angeordnet sind bei dem zweiten Getriebeelement 29 drei Verbindungselemente 32 vorgesehen, von denen zu besseren Übersicht wieder nur ein Verbindungselement 32 mit einem Bezugszeichen versehen ist. Auf die Verbindungselemente 32 wird nachfolgend noch näher eingegangen werden.

Der Taste 20 benachbart ist ein Schwenkhebel 33 schwenkbar um eine Schwenkachse 34 angeordnet. Dabei ist der Schwenkhebel 33 um eine weitere Achse 35 verschwenkbar mit der Taste 20 verbunden, wie nachfolgend noch näher erläutert wird. Weiter ist ein Kippelement 36 schwenkbar um die Schwenkachse 34 angeordnet. Das Kippelement 36 weist ein stabförmiges Verbindungsstück 37 auf, dass in der Figur nur im Querschnitt zusehen ist.

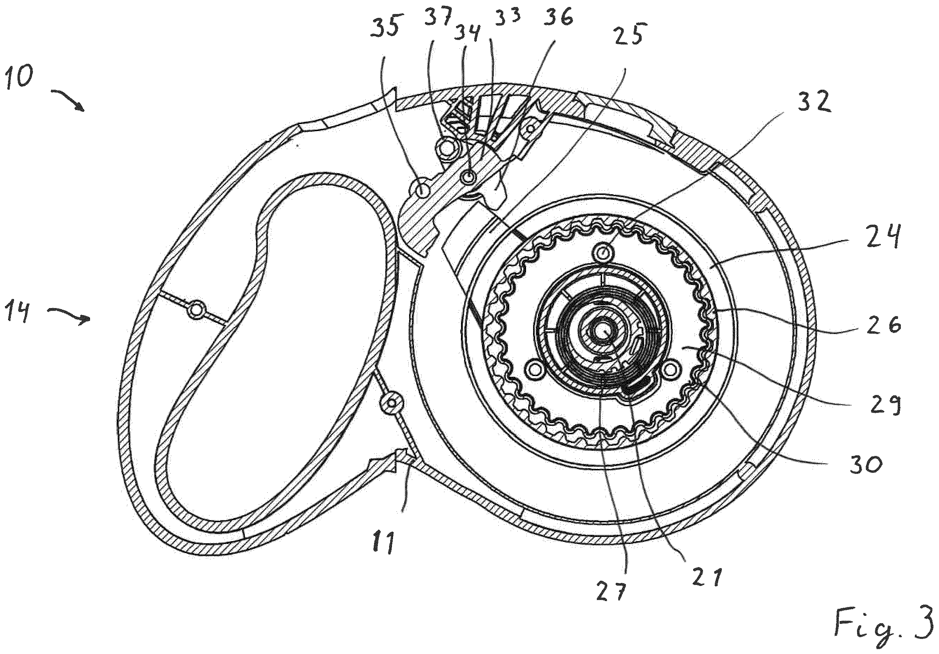

Fig. 3 zeigt eine Seitenansicht der linken Gehäusehälfte des Gehäuses 11 vom Gehäuseinnern her gesehen. Die Leinenrolle 22 ist in der Figur weggelassen.

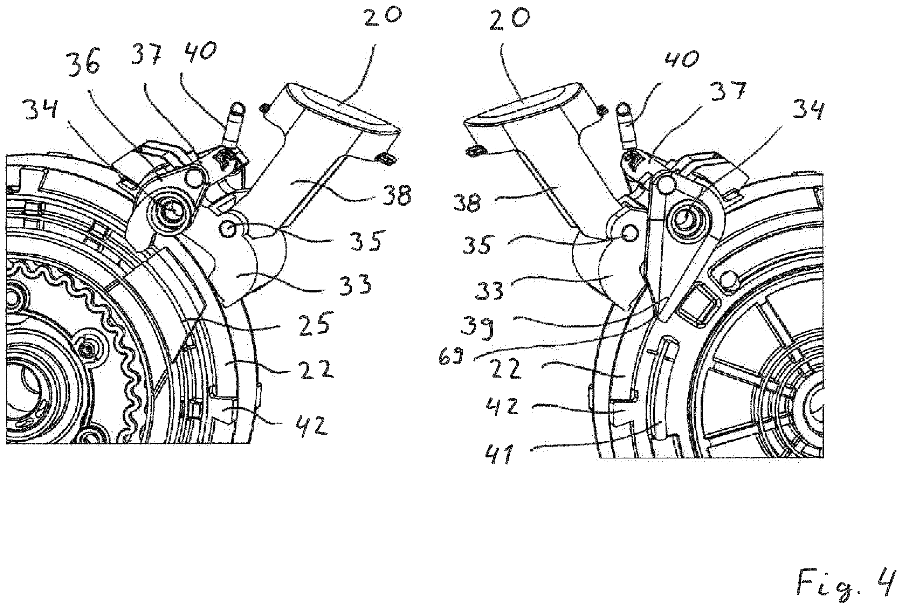

Wie sich den Fig. 2 und 3 entnehmen lässt, bilden das erste Getriebeelement 24 und zweite Getriebeelement 29 zusammen ein Zykloidgetriebe. Dabei ist das erste Getriebeelement 24 als Rotor 24 und das zweite Getriebeelement 29 als Stator 29 ausgebildet. Bei dem gezeigten Ausführungsbeispiel hat der Stator 29 zweiunddreißig Zähne und der Rotor 24 dreiunddreißig Zähne. Auf diese Weise bewegt sich der Vorsprung 25 in Fig. 2 bei jeder Umdrehung der Leinenrolle 22 in der Figur gegen den Uhrzeigersinn um eine zweiunddreißigstel Umdrehung ebenfalls gegen den Uhrzeigersinn. Schlägt der Vorsprung 25 an das Kippelement 36 an, so wird ein Blockierelement zum Blockieren der Abrollbewegung der Leinenrolle 22 ausgelöst, wie nachfolgend anhand von Fig. 4 noch erläutert.

Fig. 4 zeigt eine schematische Teildarstellung der Leinenrolle der 22 mit den wesentlichen Komponenten der Längenbegrenzung von beiden Seiten gesehen. Wie sich der Figur entnehmen lässt, ist die Taste 20 über einen Hals 38 mit der Achse 35 des Schwenkhebels 33 verbunden. Wie sich der Figur weiter entnehmen lässt, ist das Verbindungsstück 37 an seinem von dem Kippelement 36 abgewandten Ende mit einem Blockierelement 39 verbunden, das um die Schwenkachse 34 schwenkbar gelagert ist.

Weiter ist an dem Verbindungsstück 37 eine Feder 40 vorgesehen, die das Blockierelement 39 in der gezeigten Position hält.

Wie sich der Figur außerdem entnehmen lässt, ist an der Außenseite der Leinenrolle 22 in Umfangsrichtung ein Mitnehmer 41 für das Blockierelement 39 vorgesehen. Außerdem weist die Leinenrolle 22 einen in etwa radial am äußeren Umfangsrand angeordneten Anschlag 42 für den Schwenkhebel 33 auf. Die dem Mitnehmer 41 zugewandte Seite des Blockierelementes 39 ist Spitz ausgebildet und hat einen konkaven Anstoßabschnitt 69.

In dem gezeigten Zustand kann die Leinenrolle 22 auf- und abgerollt werden. Betätigt man die Taste 20 durch Drücken in der Figur nach unten parallel zu der Längserstreckungsrichtung des Halses 38, wird der Schwenkhebel 33 um die Schwenkachse 34 zu der Leinenrolle 22 hin verschwenkt. Dadurch tritt das Blockierelement 39 mit dem Anstoßabschnitt 69 in Eingriff mit dem Mitnehmer 41 und wird von diesem in dem rechten Teil der Abbildung gegen den Uhrzeigersinn geschwenkt. Die konkave Ausgestaltung des Anstoßabschnittes 69 sorgt für einen guten und zuverlässigen Kraftschluß mit dem Mitnehmer 41. Sofern der Schwenkhebel 33 durch Drücken der Taste 20 noch nicht vollständig auf die Leinenrolle 22 herabgedrückt worden ist, erfolgt durch das Anschlagen des Verbindungsstückes 37 an dem Schwenkelement 33 ein Bewegen des Schwenkhebels 33 an die Leinenrolle 22 heran, wo der Anschlag 42 gegen das Ende des Schwenkhebels 33 anschlägt und auf diese Weise ein weiteres Abrollen der Leinenrolle 22 blockiert.

Bei eingeschalteter Längenbegrenzung stößt der Vorsprung 25 gegen das der Leinenrolle 22 zugewandte untere Ende des Kippelementes 36 und bewirkt so ein Heranschwenken des Verbindungsstückes 37 an den Schwenkhebel 33. Auf diese Weise wird das Blockierelement 39 in dem rechten Teil der Abbildung gegen den Uhrzeigersinn verschwenkt und so der Anstoßabschnitt 69 von dem Mitnehmer 41 bei weiterem Abrollen der Leinenrolle 22 erfasst. Dies führt wiederum zu einem Herabdrücken des Schwenkhebels 33 mittels des Verbindungsstückes 37 und letztendlich zu einem Anschlagen des Anschlags 42 an dem der Leinenrolle 22 zugewandten Ende des Schwenkhebels 33. Auf diese Weise wird die Leinenrolle 22 gegen ein weiteres Abrollen der Leine 13 blockiert. Der Mitnehmer 41 an der sich im Gegensatz zu dem Rotor 24 schnell drehenden Leinenrolle 22 sorgt so im Zusammenwirken mit dem Anstoßanschnitt 69 des Blockierelementes 39 für ein schnelles und zuverlässiges in Eingriff treten von Schwenkhebel 33 und Anschlag 42.

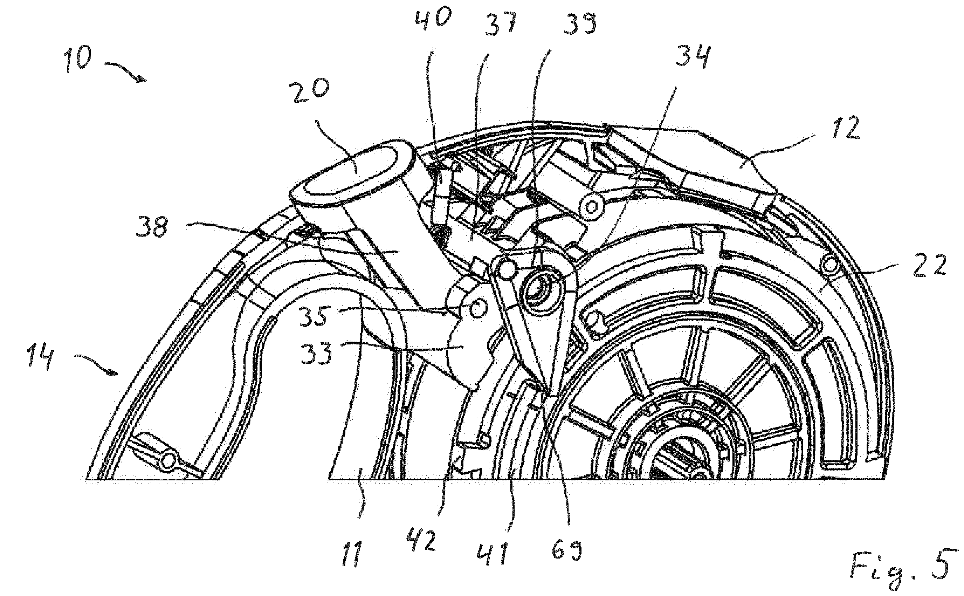

Fig. 5 zeigt eine perspektivische Teildarstellung der Rollleine 10 mit abgenommener rechter Gehäuseseite in einer Position, in der die Leinenrolle 22 blockiert ist. Wie sich der Figur entnehmen lässt, steht das Blockierelement 39 mit seinem Anstoßabschnitt 69 in Eingriff mit dem Mitnehmer 41 und schwenkt bei weiterem Drehen der Leinenrolle 22 in der Figur im Uhrzeigersinn den Schwenkhebel 33 in der Figur im Uhrzeigersinn um die Schwenkachse 34, wodurch das der Leinenrolle 22 zugewandte Ende des Schwenkhebels 33 in Eingriff mit dem Anschlag 42 tritt und ein weiteres Abrollen der Leinenrolle 22 zuverlässig blockiert.

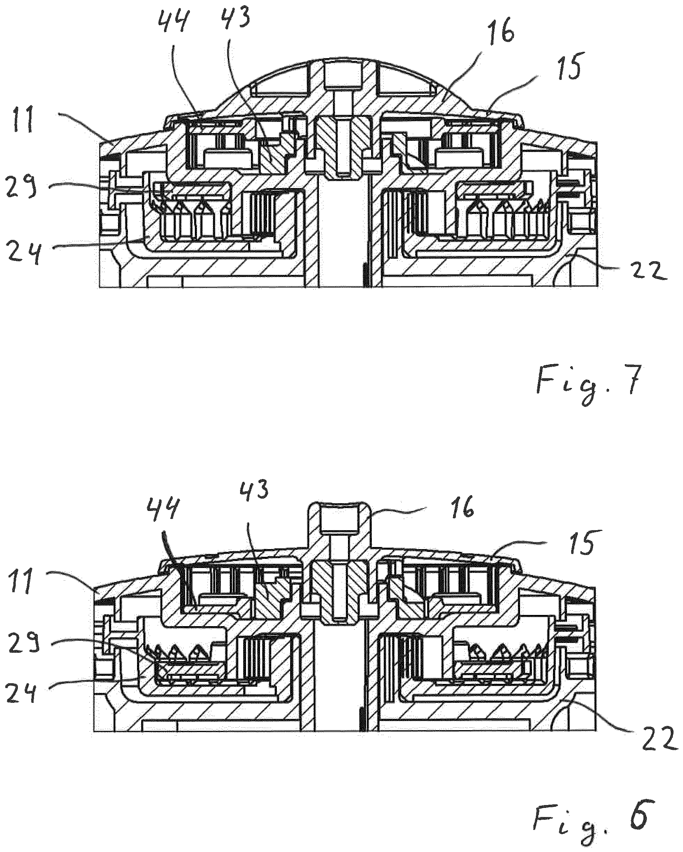

Fig. 6 zeigt den Schnitt A-A von Fig. 1 in einer Teildarstellung. Wie sich der Figur entnehmen lässt, ist eine Ausrückscheibe 43 zwischen dem Gehäuse 11 und der Stellscheibe 15 angeordnet. Die Ausrückscheibe 43 ist drehfest mit der Stellscheibe 15 verbunden, so dass ein Verdrehen der Drehscheibe 15 mittels des Betätigungselementes 16 ein Verdrehen der Ausrückscheibe 43 bewirkt. Weiter ist die Ausrückscheibe 43 umgebend eine Verbindungsscheibe 44 angeordnet, die fest mit dem Stator 29 verbunden ist. In dem gezeigten Zustand ist die Verbindungsscheibe 44 durch die Ausrückscheibe 43 in einen abgesenkten Zustand verbracht, in dem der Stator 29 in Eingriff mit dem Rotor 24 steht. Dies stellt den eingerückten Zustand von Rotor 24 und Stator 29 dar, in dem die Längenbegrenzung eingeschaltet ist. In diesem Zustand bewirkt ein Abrollen der Leinenrolle 22 ein Bewegen des Rotors 24 in der Fig. 2 gegen den Uhrzeigersinn und ein Blockieren der Leinenrolle auf die vorstehend beschriebene Weise.

Fig. 7 zeigt eine Darstellung ähnlich Fig. 6 mit um 90° in der Fig. 1 im Uhrzeigersinn gedrehter Stellscheibe 15. In diesem Zustand wird die Verbindungsscheibe 44 von der Ausrückscheibe in die dargestellte angehobener Position verbracht. Dadurch wird der mit der Verbindungsscheibe 44 verbundene Stator 29 ebenfalls von dem Rotor 24 abgehoben und so von diesem ausgerückt. In dem gezeigten Zustand kämmt der Rotor 24 nicht mit dem Stator 29. In dem gezeigten ausgerückten Zustand kann die Leinenrolle 22 frei bis zum vollständigen Abrollen der Leine 13 gedreht werden.

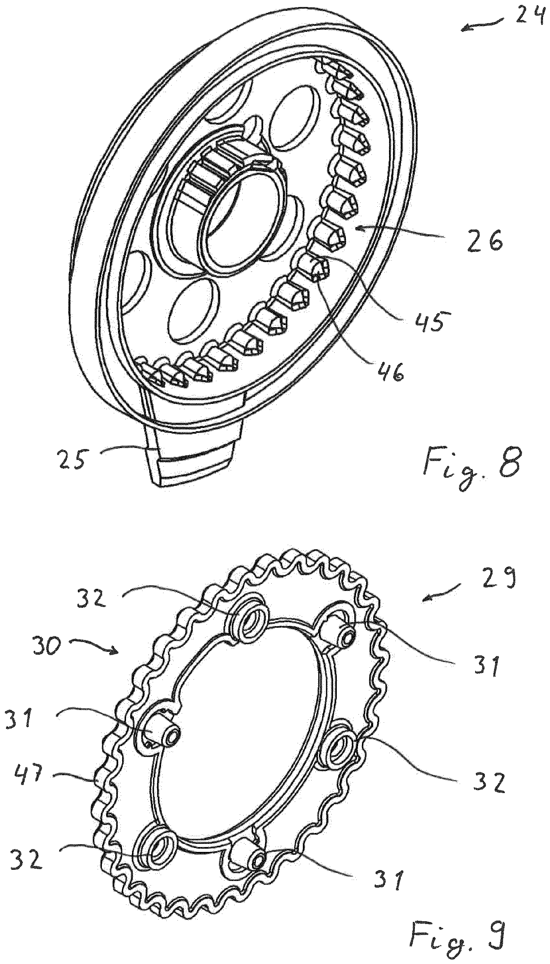

Fig. 8 zeigt eine perspektivische Darstellung des Rotors 24. Wie sich der Figur entnehmen lässt, hat die Innenzahnung 26 Zähne 45 mit einem kreisabschnittförmigen Querschnitt. Die Zähne 45 weisen eine Spitze 46 auf.

Fig. 9 zeigt eine perspektivische Darstellung des Stators 29. Wie sich der Figur entnehmen lässt, hat die Außenzahnung 30 kreissegmentförmige Zähne 47. Durch die Spitzen 46 der Zähne 45 des Rotors 24 ist ein Einrücken des Stators in den Rotor zum in Eingriff bringen der Innenzahnung 26 mit der Außenzahnung 30 auch dann möglich, wenn die Zähne 47 zumindest teilweise mit den Zähnen 45 fluchten. In diesem Fall ergibt sich ein Abgleiten der Zähne 47 auf den Spitzen 46, wodurch ein sauberes Einrücken zum in Eingriff bringen der Zähne 45, 46 miteinander gewährleistet ist.

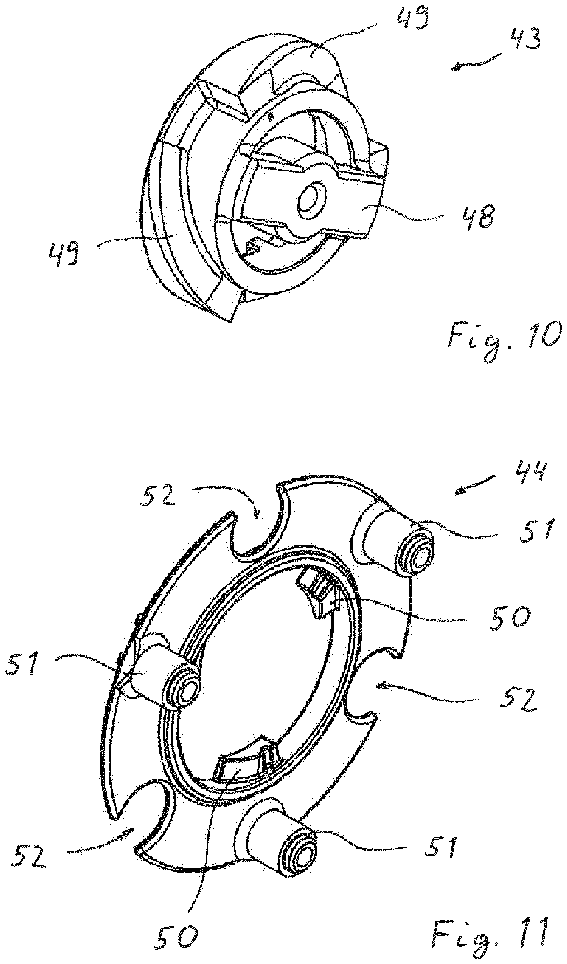

Fig. 10 zeigt eine perspektivische Ansicht der Ausrückscheibe 43. Wie sich der Figur entnehmen lässt, hat die Ausrückscheibe 43 in einem zentralen Bereich einen Befestigungsabschnitt 48. Der Befestigungsabschnitt 48 erstreckt sich längst entlang einem Teil des Durchmessers der Ausrückscheibe 43. Der Befestigungsabschnitt 48 wirkt mit einem zugeordneten Befestigungsabschnitt auf der Rückseite der Stellscheibe 15 zum Drehfest miteinander Koppeln der Stellscheibe 15 mit der Ausrückscheibe 43 zusammen. Wie sich der Figur weiter entnehmen lässt, hat die Ausrückscheibe 43 in ihrem äußeren Randbereich Rampen 49. Insgesamt sind bei der Ausrückscheibe 43 drei Rampen 49 vorgesehen, von denen in der Figur nur zwei Rampen 49 zu sehen sind.

Fig. 11 zeigt eine perspektivische Ansicht der Verbindungsscheibe 44 in einer um 180° gegenüber dem Stator 29 von Fig. 9 umgeklappten Position. Wie sich der Figur entnehmen lässt, hat die Verbindungsscheibe 44 in ihrem inneren Bereich Rampen 50, die den Rampen 49 der Ausrückscheibe 43 zugeordnet sind. Insgesamt sind drei Rampen 50 vorgesehen, von denen in der Figur nur zwei Rampen 50 zu sehen sind. Im äußeren Bereich hat die Verbindungsscheibe 44 drei den Verbindungselementen 32 des Stators 29 zugeordnete Verbindungselemente 51 und drei den Führungsstiften 31 des Stators 29 zugeordnete Aussparungen 52. In einem montierten Zustand sind die Verbindungselemente 51 mit den Verbindungselementen 32 verbunden und die Führungsstifte 31 erstrecken sich mit darauf angeordneten Schraubenfedern durch die Aussparungen 52. In diesem montierten Zustand gleiten die Rampen 50 auf den Rampen 49. Dadurch lässt sich durch eine Drehung der Stellscheibe 15 und somit eine Drehung der Ausrückscheibe 43 ein Ausrücken des Stators 29 von dem Rotor 24 durch Gleiten der Rampen 50 auf den Rampen 49 in der Fig. 10 gegen den Uhrzeigersinn bewirken. Dabei können auf den Führungsstiften 31 geführte Schraubenfedern gegen ein Widerlager am Gehäuse 11 zusammen gedrückt werden. Bei Zurückdrehen der Stellscheibe 15 und somit der Ausrückscheibe 43 in der Fig. 10 gegen den Uhrzeigersinn wird der Stator 29 durch auf den Führungsstiften 31 geführte Schraubenfedern in Richtung auf den Rotors 24 gedrückt und durch Gleiten der Rampen 50 auf den Rampen 49 in seine eingerückte Position verbracht, wie in Fig. 6 dargestellt.

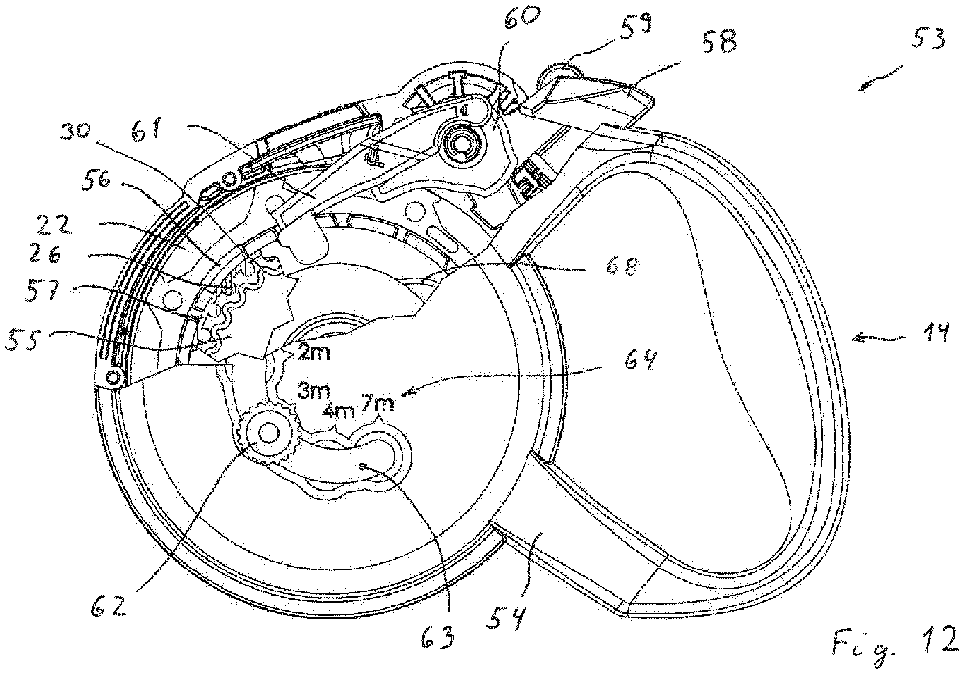

Fig. 12 zeigt eine teilgeschnittene Darstellung einer Rollleine 53 als ein zweites Ausführungsbeispiel mit den Erfindungsmerkmalen. Die Rollleine 53 entspricht der Rollleine 10. Gleiche Elemente tragen die gleiche Bezugsziffern. Im Gegensatz zu der Rollleine 10 hat die Rollleine 53 nicht die Stellscheibe 15. Die Rollleine 53 hat ein Gehäuse 54 ähnlich dem Gehäuse 11. Im Innern des Gehäuses 54 ist ein Rotor 55 ähnlich dem Rotor 24 und ein Stator 57 ähnlich dem Stator 29 angeordnet, wobei der Rotor 55 die Außenverzahnung 30 und der Stator 57 die Innenverzahnung 26 aufweist.

Anstelle der Taste 20 hat die Rollleine 53 eine Taste 58 und ein Feststellelement 59. Die Funktionsweise der Taste 58 gleicht der der Taste 20, wobei die Taste 58 in einem niedergedrückten Zustand mittels des Feststellelementes 59 feststellbar ist.

Anstelle des Kippelementes 36 ist ein Kippelement 60 mit im Wesentlichen gleicher Funktionalität vorgesehen. Das Kippelement 60 steht mit einem Hebel 61 in Verbindung. Im äußeren Bereich des Rotors 55 ist anstelle des Vorsprungs 25 ein Vorsprung 56 angeordnet, der bei dem gezeigten Ausführungsbeispiel als Lasche 56 ausgebildet ist. Gelangt bei einem Abrollen der Leinenrolle 22 die Lasche 56 in Eingriff mit dem in der Figur rollenseitigen Ende des Hebels 61, wird dieser in der Figur nach rechts geschoben. Dies bewirkt ein Verschwenken des Kippelements 61 im Uhrzeigersinn. Dadurch wird ein Blockieren des Rollenauslaufs auf die vorstehend zu der Rollleine 10 bereits beschriebene Weise bewirkt. Außerdem ist in einem äußeren Bereich des Stators 57 eine Rampe 68 angeordnet.

Anders als bei der Rollleine 10 sind Rotor 55 und Stator 57 bei der gezeigten Rollleine 53 ständig in Eingriff. Der Stator 57 kann mittels eines Betätigungselementes 62 um seine Drehachse verdreht werden. Dadurch lässt dich die Winkelposition der Lasche 56 und der Rampe 68 einstellen. In dem Gehäuse 54 ist eine Kurvenbahn 63 vorgesehen, entlang derer das Betätigungselement 62 verstellt werden kann. Es ist außerdem eine Anzeige 64 entlang der Kurvenbahn 63 vorgesehen. Bei dem gezeigten Ausführungsbeispiel besteht die Anzeige 64 aus der Angabe der Leinenablauflänge bei den entsprechenden Positionen des Betätigungselementes 62. Auf diese Weise lässt sich die gewünschte Ablauflänge der Leine von der Leinenrolle 22 stufenweise oder kontinuierlich verstellen.

Wird der Stator 57 mittels des Betätigungselementes 62 in der Figur bis zum Anschlag gegen den Uhrzeigersinn gedreht, so hebt die Rampe 68 den Hebel 61 an. Der Hebel 61 wird dabei im Uhrzeigersinn gedreht, ohne das Kippelement 60 mit zu verschwenken. Die Lasche 56 kann nun nicht mehr in Eingriff mit dem Hebel 61 treten. Die Leine 13 kann vollständig abgerollt werden.

Wird der Stator 57 mittels des Betätigungselementes 62 in der Figur gedreht, so wird außerdem der Abstand der Lasche 56 zu dem Hebel 61 verkürzt oder verlängert. Ein Blockieren des Rollenauslaufs erfolgt dann nach einer kleineren Ablauflänge bei einem kürzeren Abstand der Lasche 56 von dem Hebel 61 oder nach einer größeren Ablauflänge bei einem größeren Abstand.

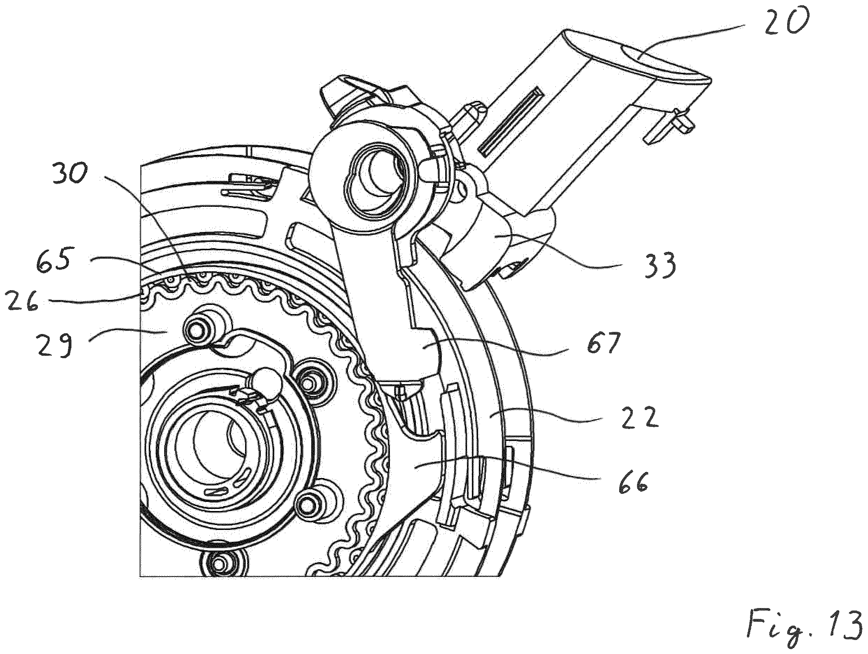

Fig. 13 zeigt die perspektivische Darstellung der wesentlichen Komponenten einer weiteren Ausführungsform einer Rollleine mit den Erfindungsmerkmalen. Gleiche Elemente tragen die gleichen Bezugsziffern. Im Unterschied zu der Rollleine 10 hat das gezeigte Ausführungsbeispiel einen Rotor 65 mit einem Vorsprung 66. Der Vorsprung 66 tritt mit einer Schubstange 67 in Eingriff, die das Auslösemoment auf die vorstehend beschriebene Weise an den Schwenkhebel 33 weiter leitet.

**Bezugszeichenliste:**

| | | | |
|---|---|---|---|
| 10 | Rollleine | 41 | Mitnehmer |
| 11 | Gehäuse | 42 | Anschlag |
| 12 | Auslaufstück | 43 | Ausrückscheibe |
| 13 | Leine | 44 | Verbindungsscheibe |
| 14 | Griff | 45 | Zahn |
| 15 | Stellscheibe | 46 | Spitze |
| 16 | Betätigungselement | 47 | Zahn |
| 17 | Anzeigeelement | 48 | Befestigungsscheibe |
| 18 | Anzeigeelement | 49 | Rampe |
| 19 | Anzeigeelement | 50 | Rampe |
| 20 | Taste | 51 | Verbindungselement |
| 21 | Achse | 52 | Aussparung |
| 22 | Leinenrolle | 53 | Rollleine |
| 23 | Exzenter | 54 | Gehäuse |
| 24 | Rotor | 55 | Rotor |
| 25 | Vorsprung | 56 | Vorsprung |
| 26 | Innenzahnung | 57 | Stator |
| 27 | Spiralfeder | 58 | Taste |
| 28 | Basis | 59 | Feststellelement |
| 29 | Stator | 60 | Kippelement |
| 30 | Außenzahnung | 61 | Hebel |
| 31 | Führungsstift | 62 | Betätigungselement |
| 32 | Verbindungselement | 63 | Kurvenbahn |
| 33 | Schwenkhebel | 64 | Anzeige |
| 34 | Schwenkachse | 65 | Rotor |
| 35 | Achse | 66 | Vorsprung |
| 36 | Kippelement | 67 | Schubstange |
| 37 | Verbindungsstück | 68 | Rampe |
| 38 | Hals | 69 | Anstoßabschnitt |
| 39 | Blockierelement | | |
| 40 | Feder | | |

## Patentansprüche

1. Rollleine zum Aufrollen und Abrollen einer Leine (13), insbesondere zum Führen eines Tieres, mit einer Leinenrolle (22), die drehbar an einem Träger (11) gelagert und mittels Rückstellmitteln in eine Aufrollposition rückstellbar ist, in der die Leine (13) auf die Leinenrolle (22) aufgewickelt ist, mit Blockiermitteln (33) zum Blockieren eines Abrollens der Leine (13) von der Leinenrolle (22), und mit einem Getriebe (24, 29, 55, 57, 65), das mit der Leinenrolle (22) gekoppelt ist und bei Abrollen einer vorbestimmten Leinenlänge von der Leinenrolle (22) ein Blockieren der Leinenrolle mittels der Blockiermittel (33) bewirkt wobei das Getriebe ein erstes Getriebeelement (24, 55, 65), das drehbar an dem Träger (11) angeordnet ist, und ein zweites Getriebeelement (29, 57) hat, das drehfest an dem Träger (11) angeordnet ist, und das erste Getriebeelement (24, 55, 65) und das zweite Getriebeelement (29, 57) einander zugeordnet einen Außenumfang und einen Innenumfang haben, die mindestens in einem aktiven Zustand miteinander in Eingriff stehen **dadurch gekennzeichnet, dass das** erste Getriebeelement (24, 55, 65) exzentrisch an der Leinenrolle (22) und drehbar zu dieser gelagert ist, wobei das Getriebe ein Zykloidgetriebe ist.

2. Rollleine nach Anspruch 1, **dadurch gekennzeichnet, dass** der Außenumfang kleiner ist als der Innenumfang, wobei vorzugsweise der Außenumfang (30) eine Außenverzahnung und/oder der Innenumfang eine Innenverzahnung (26) hat, die insbesondere miteinander kämmen, und wobei besonders bevorzugt die Anzahl der Zähne (47) der Außenverzahnung (30) ungleich, insbesondere kleiner, als die Anzahl der Zähne (45) der Innenverzahnung (26) ist.

3. Rollleine nach einem der vorhergehenden Ansprüche, **dadurch gekennzeichnet, dass** das erste Getriebeelement (24, 55, 65) Auslösemittel, vorzugsweise ein am Außenumfang angeordnetes Auslöseelement, insbesondere einen Vorsprung (25, 56, 66), zum Bewirken des Blockierens der Blockiermittel (33) hat, wobei besonders bevorzugt Übertragungsmittel, insbesondere eine Schubstange (67), zum Übertragen eines Auslösemomentes auf die Blockiermittel (33) vorgesehen sind, wobei die Übertragungsmittel vorzugsweise in eine Ruheposition, insbesondere mittels einer Feder (40), rückstellbar sind.

4. Rollleine nach einem der vorhergehenden Ansprüche, **dadurch gekennzeichnet, dass** die Blockiermittel (33) ein, insbesondere mit der Leinenrolle (22) in Eingriff bringbares, Blockierelement (39) haben, das vorzugsweise in eine Blockierposition, insbesondere verstärkt durch die Abrollbewegung der Leinenrolle (22), schwenkbar und besonders bevorzugt in eine Ruheposition, insbesondere mittels einer Feder (40), rückstellbar ist.

5. Rollleine nach Anspruch 4, **dadurch gekennzeichnet, dass** das Blockierelement (39) mit den Auslösemitteln (25, 56, 66) in Wirkverbindung bringbar ist und vorzugsweise einen Anstoßabschnitt (69) aufweist, der insbesondere mit einem Mitnehmer (41) an der Leinenrolle (22) in Eingriff bringbar ist, besonders bevorzugt zum Schwenken des Blockierelementes (39) in die Blockierposition.

6. Rollleine nach einem der vorhergehenden Ansprüche, **dadurch gekennzeichnet, dass** Betätigungsmittel zum manuellen Betätigen der Blockiermittel vorhergesehen sind, insbesondere eine Taste (20, 58).

7. Rollleine nach einem der vorhergehenden Ansprüche, **dadurch gekennzeichnet, dass** Auswahlmittel (16, 62) zum Auswählen der vorbestimmten Leinenlänge vorgesehen sind.

8. Rollleine nach Anspruch 7, **dadurch gekennzeichnet, dass** die Auswahlmittel Stellmittel (62) zum, insbesondere kontinuierlichen oder stufenweisen Einstellen der Winkelposition des zweiten Getriebeelementes (57) zu dem Träger (11) haben, wobei vorzugsweise eine Anzeige (64) der Winkelposition, insbesondere der zugehörigen Leinenlänge, an einem Gehäuse (11, 54) vorgesehen ist.

9. Rollleine nach einem der vorhergehenden Ansprüche, **dadurch gekennzeichnet, dass** Ausrückmittel (43, 44) zum Ausrücken des ersten Getriebeelementes (24) und des zweiten Getriebeelementes (29) voneinander, vorzugsweise des zweiten Getriebeelementes (29) von dem ersten Getriebeelement (24), vorgesehen sind.

10. Rollleine nach Anspruch 9, **dadurch gekennzeichnet, dass** die Ausrückmittel ein, insbesondere manuell, verstellbares Ausrückelement, vorzugsweise eine verdrehbare Ausrückscheibe (43), haben, die besonders bevorzugt mindestens eine Schräge (49) hat, auf der insbesondere mindestens eine dem zweiten Getriebeelement (29) zugeordnete Nocke, vorzugsweise Schräge (50), zum Ausrücken gleitet.

## Claims

1. Retractable leash for coiling and uncoiling a leash (13), in particular for guiding an animal, with a leash reel (22), which is rotatably mounted on a carrier (11) and can be returned by means of resetting means to a coiled position in which the leash (13) is wound onto the leash reel (22), with blocking means (33) for blocking an uncoiling of the leash (13) from the leash reel (22) and with a transmission (24, 29, 55, 57, 65) which is coupled to the leash reel (22) and effects a blocking of the leash reel by means of the blocking means (33) when a predetermined leash length is uncoiled from the leash reel (22), wherein the transmission has a first transmission element (24, 55, 65) rotatably arranged on the carrier (11), and a second transmission element (29, 57) arranged on the carrier (11) in a rotationally secure manner, and the first transmission element (24, 55, 65) and the second transmission element (29, 57) associated with each other have an external circumference and an internal circumference which engage with one another at least in an active state, **characterized in that** the first transmission element (24, 55, 65) is mounted eccentrically on the leash reel (22) and rotatably with respect thereto, wherein the transmission is a cycloidal transmission.

2. Retractable leash according to claim 1, **characterized in that** the external circumference is smaller than the internal circumference, wherein preferably the external circumference (30) has an external toothing and/or the internal circumference has an internal toothing (26), which in particular mesh with one another, and wherein the number of teeth (47) of the external toothing (30) is particularly preferably not equal to, in particular smaller than, the number of teeth (45) of the internal toothing (26).

3. Retractable leash according to any one of the preceding claims, **characterized in that** the first transmission element (24, 55, 65) has release means, preferably a release element arranged on the external circumference, in particular a projection (25, 56, 66), for causing the blocking means (33) to be blocked, wherein particularly preferably transmission means, in particular a push rod (67), are provided for transmitting a release torque to the blocking means (33), wherein the transmission means can preferably be reset, in particular by means of a spring (40), into a rest position.

4. Retractable leash according to any one of the preceding claims, **characterized in that** the blocking means (33) have a blocking element (39), which can in particular engage with the leash reel (22) and which can preferably be pivoted into a blocking position, in particular reinforced by the uncoiling movement of the leash reel (22), and can particularly preferably be reset into a rest position, in particular by means of a spring (40).

5. Retractable leash according to claim 4, **characterized in that** the blocking element (39) can be brought into operative connection with the release means (25, 56, 66) and preferably has an abutment portion (69) which can be brought into engagement in particular with a driver (41) on the leash reel (22), particularly preferably for pivoting the blocking element (39) into the blocking position.

6. Retractable leash according to any one of the preceding claims, **characterized in that** actuating means for manually actuating the blocking means are provided, in particular a button (20, 58).

7. Retractable leash according to any one of the preceding claims, **characterized in that** selection means (16, 62) are provided for selecting the predetermined leash length.

8. Retractable leash according to claim 7, **characterized in that** the selection means have adjusting means (62) for adjusting the angular position of the second transmission element (57) relative to the carrier (11), in particular continuously or incrementally, wherein preferably a display (64) of the angular position, in particular of the associated leash length, is provided on a housing (11, 54).

9. Retractable leash according to any one of the preceding claims, **characterized in that** disengagement means (43, 44) are provided for disengaging the first transmission element (24) and the second transmission element (29) from each other, preferably the second transmission element (29) from the first transmission element (24).

10. Retractable leash according to claim 9, **characterized in that** the disengagement means have an in particular manually adjustable disengaging element, preferably a rotatable release disk (43), which particularly preferably has at least one incline (49) on which in particular at least one cam, preferably incline (50), associated with the second transmission element (29) slides for disengagement.

## Revendications

1. Laisse enroulable pour enrouler et dérouler une laisse (13), en particulier pour guider un animal, comprenant un rouleau de laisse (22), agencé rotatif sur un support (11) et pouvant être ramené au moyen de moyens de retour dans une position enroulée, dans laquelle la laisse (13) est bobinée sur le rouleau de laisse (22), comprenant des moyens de blocage (33) destinés à bloquer un déroulement de la laisse (13) depuis le rouleau de laisse (22) et comprenant un entraînement (24, 29, 55, 57, 65), accouplé au rouleau de laisse (22) et qui provoque, lors du déroulement d'une longueur de laisse prédéfinie depuis le rouleau de laisse (22), un blocage du rouleau de laisse au moyen des moyens de blocage (33), l'entraînement présentant un premier élément d'entraînement (24, 55, 65), disposé rotatif sur le support (11), ainsi qu'un deuxième élément d'entraînement (29, 57), disposé solidaire en rotation sur le support (11) et le premier élément d'entraînement (24, 55, 65) et le deuxième élément d'entraînement (29, 57) présentant, associées l'une à l'autre, une circonférence externe et une circonférence interne, qui sont, au moins dans un état actif, en prise l'une avec l'autre, **caractérisée en ce que** le premier élément d'entraînement (24, 55, 65) est disposé rotatif et de manière excentrique par rapport au rouleau de laisse (22), l'entraînement étant un entraînement cycloïde.

2. Laisse enroulable selon la revendication 1, **caractérisée en ce que** la circonférence externe est plus petite que la circonférence interne, de préférence, la circonférence externe (30) présentant une denture externe et/ou la circonférence interne présentant une denture interne (26), qui s'engrènent en particulier l'une avec l'autre et, de manière particulièrement préférée, le nombre de dents (47) de la denture externe (30) étant différent, en particulier inférieur, au nombre de dents (45) de la denture interne (26).

3. Laisse enroulable selon l'une quelconque des revendications précédentes, **caractérisée en ce que** le premier élément d'entraînement (24, 55, 65) présente des moyens de déclenchement, de préférence un élément de déclenchement disposé au niveau de la circonférence externe, en particulier une saillie (25, 56, 66), pour provoquer le blocage des moyens de blocage (33), de manière particulièrement préférée, des moyens de transmission, en particulier une tige de poussée (67), étant prévus pour la transmission d'un couple de déclenchement aux moyens de blocage (33), les moyens de transmission pouvant être ramenés de préférence dans une position de repos, en particulier au moyen d'un ressort (40).

4. Laisse enroulable selon l'une quelconque des revendications précédentes, **caractérisée en ce que** les moyens de blocage (33) présentent un élément de blocage (39), en particulier pouvant être mis en prise avec le rouleau de laisse (22), qui peut être pivoté de préférence dans une position de blocage, en particulier de manière amplifiée par le mouvement de déroulement du rouleau de laisse (22) et de manière particulièrement préférée ramené dans une position de repos, en particulier au moyen d'un ressort (40).

5. Laisse enroulable selon la revendication 4, **caractérisée en ce que** l'élément de blocage (39) peut être placé en liaison active avec les moyens de déclenchement (25, 56, 66) et présente de préférence une section de butée (69), qui peut être mise en prise en particulier avec un taquet (41) sur le rouleau de laisse (22), de manière particulièrement préférée pour le pivotement de l'élément de blocage (39) dans la position de blocage.

6. Laisse enroulable selon l'une quelconque des revendications précédentes, **caractérisée en ce que** des moyens d'actionnement sont prévus pour l'actionnement manuel des moyens de blocage, en particulier un bouton (20, 58).

7. Laisse enroulable selon l'une quelconque des revendications précédentes, **caractérisée en ce que** des moyens de sélection (16, 62) sont prévus pour sélectionner la longueur de laisse prédéfinie.

8. Laisse enroulable selon la revendication 7, **caractérisée en ce que** les moyens de sélection présentent des moyens de réglage (62) pour le réglage, en particulier continu ou progressif, de la position angulaire du deuxième élément d'entraînement (57) par rapport au support (11), de préférence, une indication (64) de la position angulaire, en particulier de la longueur de laisse associée, étant prévue sur un boîtier (11, 54).

9. Laisse enroulable selon l'une quelconque des revendications précédentes, **caractérisée en ce que** des moyens de désengagement (43, 44) sont prévus pour le désengagement du premier élément d'entraînement (24) et du deuxième élément d'entraînement (29) l'un de l'autre, de préférence du deuxième entraînement (29) par rapport au premier élément d'entraînement (24).

10. Laisse enroulable selon la revendication 9, **caractérisée en ce que** les moyens de désengagement présentent un élément de désengagement réglable, en particulier manuellement, de préférence un disque de désengagement rotatif (43), qui présente de manière particulièrement préférée au moins une pente (49), sur laquelle en particulier au moins une came, de préférence une pente (50) associée au deuxième élément d'entraînement (29), coulisse pour le désengagement.
